# EUROPÄISCHE PATENTSCHRIFT

(11) **EP 0 622 275 B1**
(45) Veröffentlichungstag und Bekanntmachung des Hinweises auf die Patenterteilung: **13.05.1998**
(21) Anmeldenummer: 94103845.7
(22) Anmeldetag: 12.03.1994
(51) Int. Cl.: B60R 21/20, B60R 21/16

(54) **Verfahren zum Falten eines Luftsackes**
Method to fold an airbag
Méthode de pliage d'un sac à air

(30) Priorität: 30.04.1993 DE 4314207
(43) Veröffentlichungstag der Anmeldung: 02.11.1994
(73) Patentinhaber: Dr.Ing. h.c. F. Porsche Aktiengesellschaft, 70435 Stuttgart (DE)
(72) Erfinder: Linder, Leo, D-89269 Vöhringen (DE)

(56) Entgegenhaltungen:
- DE-A- 2 536 933
- DE-A- 3 544 704
- US-A- 4 884 823

## Beschreibung

Die Erfindung betrifft ein Verfahren zum Falten eines Luftsackes und einen Luftsack nach den Gattungen der unabhängigen Patentansprüche.

Luftsäcke werden als Aufprallschutzvorrichtung in Fahrzeugen verwendet. Im Ruhezustand sind die Luftsäcke zusammen mit einer Aufblasvorrichtung, üblicherweise einem Gasgenerator, in einem wannenförmigen Gehäuse verstaut, das beispielsweise in einem Lenkrad eines Fahrzeuges untergebracht ist.

Es sind Verfahren zum Falten des Luftsackes zur Unterbringung in solchen Gehäusen bekannt geworden, die, wie beispielsweise die sogenannte Rollfaltung, einen im wesentlichen rund zugeschnittenen Luftsack zunächst durch Falten in die Form einer langgestreckten Bahn mit parallelen Seiten bringen und dann durch Einschlagen der freien Enden der Bahn ein im wesentlichen rechteckiges Päckchen erzeugen.

Zur Aufnahme eines solchen Luftsackes verwendete Lenkräder weisen zum Teil die sog. "Vierspeichenform" auf, d.h. ausgehend von einem Lenkradkranz erstrecken sich vier Speichen zu einem Prallkörper mit schrägverlaufenden Wandungen (siehe z.B. US-A-4 884 823). Zur Unterbringung eines Luftsackes in einem solchen Prallkörper wurde bisher das zuvor beschriebene Verfahren angewendet. Um den mit diesem Verfahren zu einer rechteckigen Stauform zusammengelegten Luftsack im Prallkörper unterbringen zu können, war es entweder notwendig, den Luftsack so klein zu packen, daß er nicht über die Gehäusewandungen des Prallkörpers hinausragt oder ihn so zu packen, daß er an den schrägverlaufenden Gehäusewandungen des Prallkörpers etwas über die Gehäusewandungen hinausragt und an diesen Stellen bei der Montage einer Gehäuseabdeckung gestopft werden muß.

Aus der DE A1 35 44 704 ist eine Aufprallschutzvorrichtung für die Insassen eines Kraftfahrzeuges bekannt geworden, bei der ein Luftsack zunächst zu einer Bahn parallen Seiten zusammengelegt wird, wobei diese parallelen Seiten innerhalb der Wandungen eines Gehäuses zur Aufnahme des Luftsackes verlaufen. Diese Bahn wird sodann ausgehend von den Enden der Bahn zusammengefaltet und in Vertiefungen verstaut, die in Richtung der Längserstreckung der Bahn seitlich am Gehäuse vorgesehen sind.

Ferner ist aus der DE A1 25 36 933 eine Sicherheitsvorrichtung und ein Verfahren zu ihrer Herstellung bekannt geworden, bei dem ein Luftsack zunächst zu einer quadratischen Stauform gefaltet wird. Zur Anpassung an ein den gefalteten Luftsack aufnehmendes Gehäuses wird die Stauform des Luftsackes anschließend verkleinert, indem die an den Ecken gebildeten Spitzen des Quadrates nach innen zum Mittelpunkt geschlagen werden, so daß als neue Stauform wiederum ein Quadrat, nun aber mit verminderter Flächenausdehnung, gebildet ist.

Es ist daher Aufgabe der Erfindung, ein Verfahren zum Falten eines Luftsackes und einen Luftsack zu schaffen, mit dem die Stauform des Luftsackes einem wannenförmigen Gehäuse angepasst ist.

Erfindungsgemäß wird der Luftsack so gefaltet, daß ausgehend von einer Bahn mit parallelen Seiten der Luftsack zunächst weiter zu einer rechteckigen Form verkleinert wird, dann durch diagonales Einschlagen Spitzen gebildet werden und durch weiteres, schräges Einschlagen die Spitzen über Vertiefungen zu liegen kommen, in die sie dann aus der bisherigen Faltebene hinaus gesteckt werden. Besonders vorteilhaft ist hierbei die Verringerung des Packmaßes durch die Nutzung der Vertiefungen, so daß die Erstreckung des Luftsackes aus dem Gehäuse heraus verringert ist. Dies ist auch dadurch bedingt, daß gegenüber bekannten Ausführungen in der Packhöhe eine Packlage entfällt. Gleichzeitig kann das Gehäuse nun kompakter ausgeführt werden, nimmt so weniger Bauraum in Anspruch und kann mit größerer Formfreiheit gestaltet werden.

Mit den in den Unteransprüchen beschriebenen Merkmalen ist die Stauform des Luftsack einem im wesentlichen trapezförmigen Gehäuse zur Aufnahme des Luftsackes noch weiter angepasst. Dadurch ist der Luftsack in einem solchen Gehäuse einfach zu packen und kommt unter verbesserter Raumausnutzung und daher sehr flach zu liegen.

Allen Ausbildungen gemeinsam ist, daß die in der Gehäuseabdeckung angeordneten Aufreißnähte im Ruhezustand geringer belastet sind, da der Luftsack in seiner Stauform sehr gleichmäßig zusammengelegt ist und einen gleichmäßigen Druck auf die Gehäuseabdeckung ausübt.

Ein Ausführungsbeispiel der Erfindung ist nachstehend anhand der Zeichnungen beschrieben.

Es zeigen
- Fig. 1: ein Lenkrad eines Fahrzeuges mit einem Gehäuse zur Aufnahme eines Luftsackes,
- Fig. 2: einen Schnitt nach der Linie II-II durch das Gehäuse und
- Fig. 3: ein Faltschema zum erfindungsgemäßen Falten des Luftsackes.

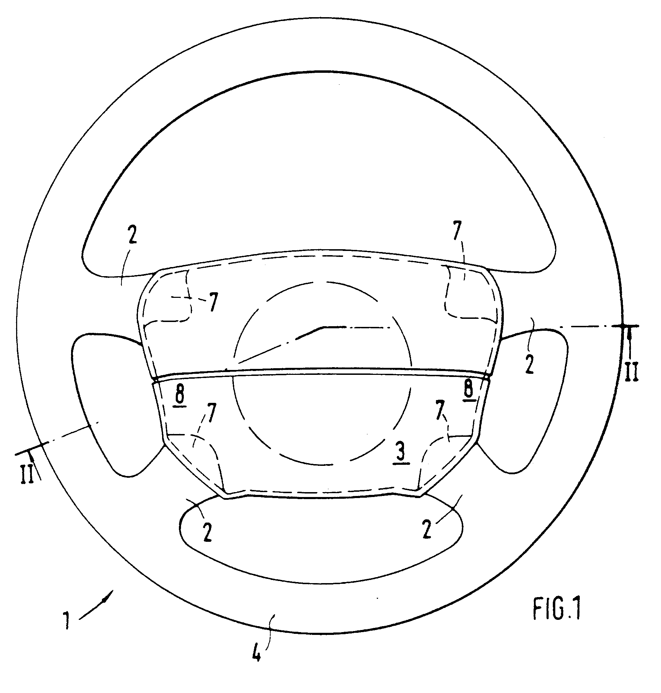

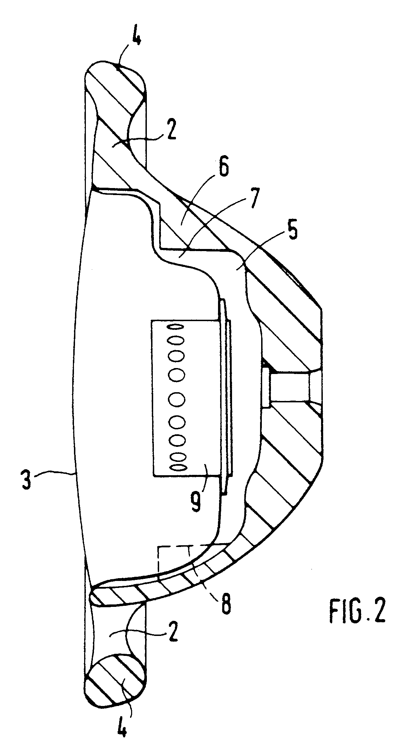

Ein in Fig. 1 mit 1 bezeichnetes Lenkrad weist vier Speichen 2 auf, die von einem zentralen Prallkörper 3 radial zu einem Lenkradkranz 4 verlaufen. Im Schnitt des Lenkrades 1 nach Fig. 2 ist im oberen Teil ein Schnitt durch eine Speiche 2 und im unteren Teil ein Schnitt zwischen zwei Speichen 2 dargestellt. Der Prallkörper 3 sitzt in einer Höhlung 5 des Lenkrades 1, die im Bereich der Speichen 2 Vorsprünge 6 zur nicht dargestellten Befestigung des Prallkörpers 3 aufweist. Der Prallkörper 3 weist daher korrespondierend zu den Vorsprüngen 6 korrespondierende Ausnehmungen 7 (siehe auch Fig. 1) auf. Zwischen den Ausnehmungen 7 und damit zwischen den Speichen 2 sind zwei Vertiefungen 8 gebildet, die nach innen von dem mittig im Prallkörper 3 angeordneten Gasgenerator 9 begrenzt sind.

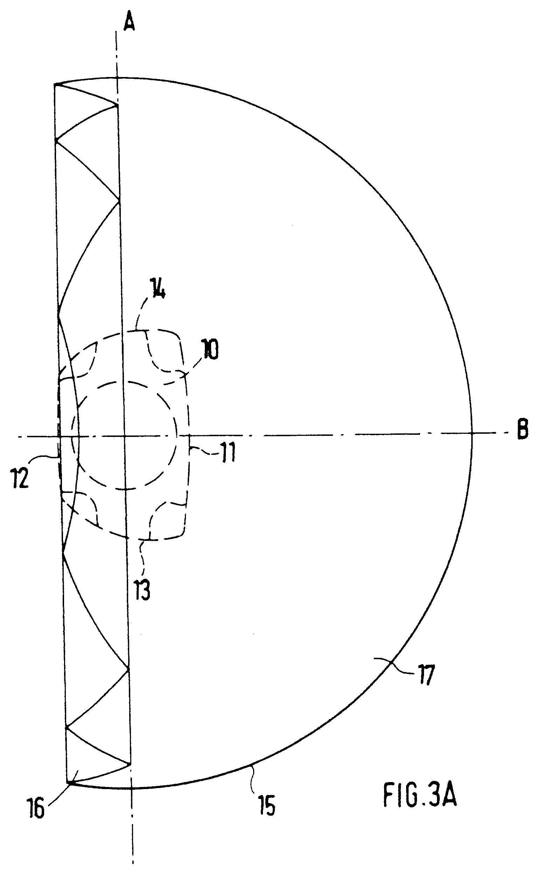

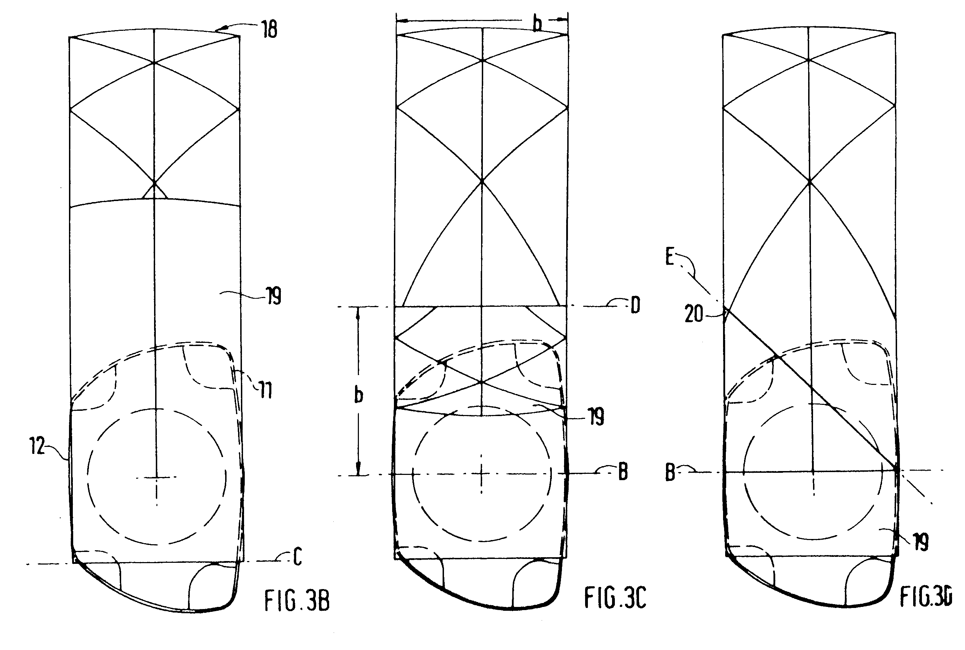

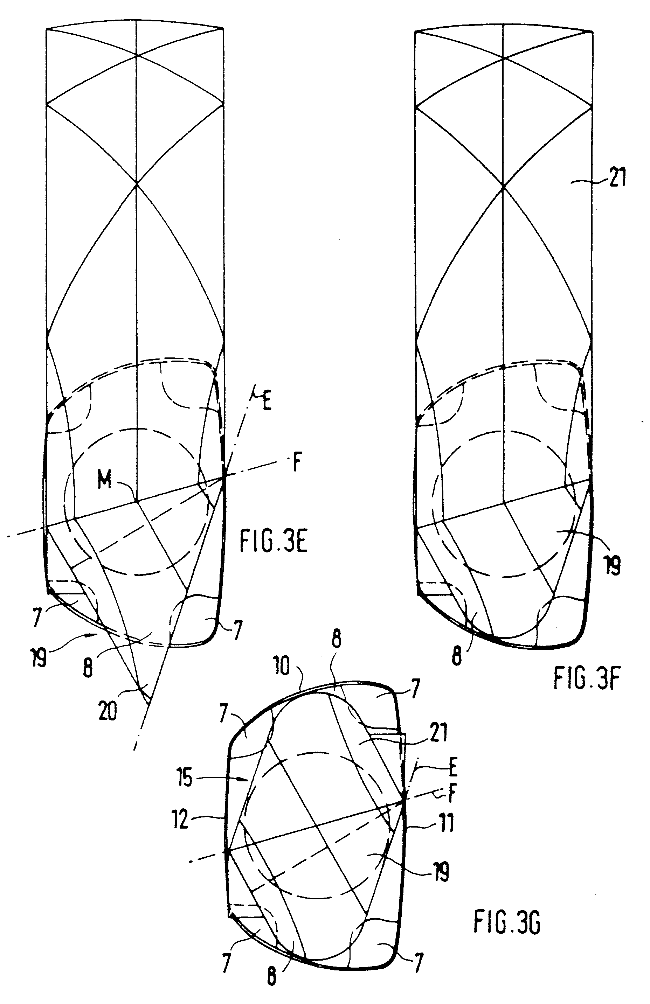

Ein wannenförmiges Gehäuse 10 des Prallkörpers 3 ist in Fig. 3 gestrichelt dargestellt. Das Gehäuse 10 ist annähernd trapezförmig und weist zwei parallele Gehäusewandungen, nämlich eine lange Seite 11 und eine kurze Seite 12 auf. Die parallelen Gehäusewandungen 11, 12 sind durch zwei schrägverlaufende Gehäusewandungen 13, 14 miteinander verbunden. Es versteht sich, daß die geometrische Beschreibung des Gehäuses 10 nur eine Annäherung ist; so sind im Ausführungsbeispiel die Gehäusewandungen 11 bis 14 nicht als Gerade, sondem gekrümmt ausgeführt.

Ein im Gehäuse 10 gehaltener Luftsack 15 bildet im flach ausgelegten Zustand eine kreisförmige Scheibe, die kreisparallel zum Gasgenerator 9 liegt. Diese wird zum Verstauen im Gehäuse 10 zunächst hälftig zusammengefaltet, wobei die Falten parallel zu den parallelen Gehäusewandungen 11, 12 verlaufen. Zickzackförmig zusammengelegt entstehen so zwei parallele Streifen 16,21, die zum einen durch die parallelen Gehäusewandungen 11, 12 und zum anderen durch die erste Mittellinie des Gehäuses A, die ebenfalls parallel zu den Gehäusewandungen 11, 12 verläuft, begrenzt sind. An der Mittellinie A stoßen die beiden Streifen 16,21 aneinander. In Fig. 3a ist die linke Hälfte des Luftsackes 15 bereits zum Streifen 16 zusammengelegt, während die zweite Hälfte 17, die später den zweiten Streifen 21 bilden wird, noch kreisförmig ausgelegt ist. Nach diesem ersten Schritt ist der Luftsack 15 in Form einer Bahn 18, bestehend aus dem ersten Streifen 16 und dem zweiten Streifen 21 zusammengelegt.

Nachfolgend ist zunächst beschrieben, wie eine erste Hälfte 19 der Bahn 18 weiter gefaltet wird.

Im zweiten Schritt wird nun die erste Hälfte 19 der Bahn 18 senkrecht zur bisherigen Faltung über den Gasgenerator 9 hinaus so umgeschlagen, daß die neue Faltlinie C etwa am Ende der kurzen parallelen Gehäusewandung 12 zu liegen kommt. Im dritten, in Fig. 3c dargestellten Schritt wird die Bahnhälfte 19 entlang der Faltlinie D entgegen der bisherigen Faltrichtung in Richtung des Gasgenerators 9 so umgeschlagen, daß der Abstand zwischen der Faltlinie D und einer zweiten Mittellinie B des Gehäuses 10 in etwa der Breite b der Bahn 18 entspricht. Die zweite Mittellinie B steht dabei senkrecht auf der ersten Mittellinie A.

Im vierten Schritt wird, wie in Fig. 3d dargestellt, die Bahnhälfte 19 im gleichen Faltsinn entlang einer Faltlinie E umgeschlagen, wobei die Faltlinie E so liegt, daß am Ende der Bahnhälfte 19 ein in etwa rechtwinkeliges Dreieck gebildet ist, dessen rechtwinkelige Seiten parallel zu den Mittellinien A, B verlaufen. Die Faltlinie D kommt dabei auf dem Rand der Bahn 19 zu liegen. Durch diesen Schritt ist eine Spitze 20 gebildet.

Im fünften Schritt nach Fig. 3e ist die Bahnhälfte 19 an einer Faltlinie F, die durch den Mittelpunkt M des Gehäuses 10 läuft, so umgeschlagen, daß die Spitze 20 die Vertiefung 8 überdeckt und darüber hinausragt. Mit dem sechsten Schritt nach Fig. 3f wird die Faltung der ersten Bahnhälfte 19 beendet, indem die Spitze 20 nicht mehr sichtbar aus der bisherigen Faltebene hinaus umgeknickt und in die Vertiefung 8 hineingesteckt wird.

Anschließend wird die zweite Bahnhälfte 21 in analoger Weise gefaltet, so daß sich schließlich der in Fig. 3g gezeigte Endzustand ergibt. Dieser zeichnet sich dadurch aus, daß der zusammengefaltete Luftsack 15 - in der Faltebene gesehen - eine in etwa rautenförmige Stauform angenommen hat, wobei die Spitzen der Raute in den Vertiefungen 8 zu liegen kommen. Die beiden Bahnhälften 19,21 liegen mit ihren Faltlinien F aneinander, wobei diese Faltlinien F in etwa parallel zu einer der schrägverlaufenden Gehäusewandungen 13,14 verlaufen. Der in der Faltebene liegende Teil des Luftsackes 15 weist über die gesamte Fläche eine im wesentlichen konstante Dicke auf.

Zur Komplettierung des Prallkörpers 3 wird abschließend am Gehäuse 10 eine nicht gezeigte Gehäuseabdeckung angebracht, die das Gehäuse 10 abschließt und den zusammengelegten Luftsack 15 in seiner Staulage hält.

Der Luftsack 15 weist nun die folgende, in Fig. 3g dargestellte Stauform auf: er ist parallel zu den parallen Gehäusewandungen 11,12 zu einer Bahn 18 zusammengelegt, die hälftig und korrespondierend je
- in einer unteren Packlage die Falte C innerhalb der kürzeren der beiden parallelen Gehäusewandungen 12 und im rechten Winkel zu den parallen Gehäusewandungen 11,12 und
- in einer oberen Packlage zentral die Falte F, die in etwa durch den Gehäusemittelpunkt M so verläuft, daß die Spitze 20 über der Vertiefung 8 zu liegen kommt, wobei
- die Seiten des die Spitze 20 bildenden Dreieckes von einerseits der Falte E und andererseits der Falte D und dem Rand der Bahn 19 gebildet werden,
   aufweist.

## Patentansprüche

1. Verfahren zum Falten eines Luftsackes (15) zur Unterbringung in einem Gehäuse (10), in dem eine Aufblasvorrichtung (9) und der zusammengefaltete Luftsack (15) untergebracht sind, dessen dem Fahrzeuginsassen zugewandte Seite mit einer Abdeckkappe versehen ist und das benachbart von schrägverlaufenden Seitenwandungen (13,14) Vertiefungen (8) aufweist, **dadurch gekennzeichnet**, daß der Luftsack (15) benachbart der schrägverlaufenden Seitenwandungen (13,14) zu Spitzen (20) zusammengelegt wird und die Spitzen (20) in die Vertiefungen (8) eingesteckt werden.

2. Verfahren nach Anspruch 1, **gekennzeichnet** durch folgende Schritte zum Zusammenlegen des Luftsacke (15) zu Spitzen:
- Zusammenlegen des Luftsackes (15) zu einer Bahn (18) mit parallelen Seiten,
- Zurückschlagen einer Hälfte (19) der Bahn (18) um eine erste Faltlinie (C),
- diagonales Einschlagen des freien Endes der Hälfte (19) der Bahn (18) um eine zweite Faltlinie (E), wobei die zweite Faltline (E) durch eine Ecke des freien Endes läuft und diese Ecke die Spitze (20) bildet,
- entgegengesetzes schräges Einschlagen der Bahn (18) um eine dritte Faltlinie (F), wobei die dritte Faltlinie (F) in etwa durch einen Mittelpunkt (M) des Gehäuses (10) läuft und derart liegt, daß die Spitze (20) über der Vertiefung (8) zu liegen kommt,
- Einstecken der Spitze (20) in die Vertiefung (8) durch rechtwinkeliges Abknicken der Spitze (20) aus der Faltebene hinaus und
- entsprechendes Einschlagen der zweiten Bahnhälfte.

3. Luftsack (15) für eine Aufprall-Schutzvorrichtung für Fahrzeuginsassen bestehend aus einem wannenförmigen Gehäuse (10), in dem eine Aufblasvorrichtung (9) und der zusammengefaltete Luftsack (15) untergebracht sind und dessen dem Fahrzeuginsassen zugewandte Seite mit einer Abdeckkappe versehen ist, und das benachbart von schrägverlaufenden Seitenwandungen (13,14) Vertiefungen (8) aufweist, **dadurch gekennzeichnet**, daß der Luftsack (15) benachbart der schrägverlaufenden Seitenwandungen (13,14) zu Spitzen (20) zusammengelegt ist und die Spitzen (20) in die Vertiefungen (8) eingesteckt sind.

4. Luftsack (15) nach Anspruch 3, **dadurch gekennzeichnet**, daß der Luftsack (15) zu einer Bahn (18) parallel zu parallen Gehäusewandungen (11,12) eines Gehäuses (10) zur Aufnahme des Luftsackes (15) zusammengelegt ist und die Bahn (18) hälftig und korrespondierend jeweils aufweist:
- in einer unteren Packlage eine erste Falte (C), die innerhalb des Gehäuses (10) und außerhalb der Vertiefung (8) im rechten Winkel zur Längserstreckung der Bahn (18) verläuft und
- in einer oberen Packlage eine zentrale Falte (F), die in etwa durch einen Mittelpunkt (M) des Gehäuses (10) so verläuft, daß die Spitze (20) über der Vertiefung (8) zu liegen kommt, wobei
- die Seiten eines die Spitze (20) bildenden Dreieckes von einerseits einer diagonalen Falte (E), die durch eine Ecke des freien Endes der Bahn (19) läuft, und andererseits dem Rand der Bahn (19) gebildet werden.

## Claims

1. A method of folding an airbag (15) for accommodation in a housing (10) in which an inflation device (9) and the folded airbag (15) are accommodated, the side of the housing facing the vehicle occupant being provided with a covering cap and having recesses (8) adjacent to obliquely extending sidewalls (13, 14), characterised in that the airbag (15) is folded into points (20) adjacent to the obliquely extending sidewalls (13, 14) and the points (20) are inserted into the recesses (8).

2. A method according to claim 1, characterised by the following steps for folding the airbag (15) into points:
- the airbag (15) is folded into a strip (18) with parallel sides;
- one half (19) of the strip (18) is folded back about a first folding line (C);
- the free end of the half (19) of the strip (18) is folded diagonally about a second folding line (E), the second folding line (E) extending through one corner of the free end, and this corner forming the point (20);
- the strip (18) is folded diagonally about a third folding line (F) in the opposite direction, the third folding line (F) extending substantially through a central point (M) of the housing (10) and being arranged so that the point (20) comes to lie beyond the recess (8);
- the point (20) is inserted into the recess (8) by bending the point (20) at right angles out of the folding plane, and
- the second half of the strip is folded in a corresponding manner.

3. An airbag (15) for an impact protection device for vehicle occupants, comprising a tub-shaped housing (10) in which an inflation device (9) and the folded airbag (15) are accommodated, the side of the housing facing the vehicle occupant being provided with a covering cap and having recesses (8) adjacent to obliquely extending sidewalls (13, 14), characterised in that the airbag (15) is folded into points (20) adjacent to the obliquely extending sidewalls (13, 14) and the points (20) are inserted into the recesses (8).

4. An airbag (15) according to claim 3, characterised in that the airbag (15) is folded into a strip (18) so as to be parallel with parallel housing walls (11, 12) of a housing (10) for holding the airbag (15), and each corresponding half of the strip (18) has:
- in a lower packing position, a first fold (C) extending inside the housing (10) and outside the recess (8) at right angles to the longitudinal extent of the strip (18), and
- in an upper packing position, a central fold (F) extending substantially through a central point (M) of the housing (10) so that the point (20) comes to lie beyond the recess (8),
- the sides of a triangle, forming the point (20), being formed on one side by a diagonal fold (E) extending through one corner of the free end of the strip (19), and on the other side by the edge of the strip (19).

## Revendications

1. Procédé de pliage d'un sac gonflable (15) en vue de loger dans un boîtier (10), dans lequel un dispositif de gonflage (9) et le sac gonflable (15) replié sont logés, boîtier dont la face, tournée vers les passagers du véhicule, est pourvue d'un clapet de recouvrement et présente des creusements (8), au voisinage des parois latérales (13, 14) d'allure oblique, caractérisé en ce que le sac gonflable (15) est replié au voisinage des parois latérales (13, 14) d'allure oblique, en formant des pointes (20), et les pointes (20) étant enfichées dans les creusements (8).

2. Procédé selon la revendication 1, caractérisé par les étapes ci-après concernant le pliage du sac gonflable (15) avec formation de pointes :
pliage du sac gonflable (15) en constituant une bande (18) ayant des côtés parallèles,
rabattement d'une moitié (19) de la bande (18) autour d'une première ligne de pliage (C),
pliage en diagonale de l'extrémité libre de la moitié (19) de la bande (18) autour d'une deuxième ligne de pliage (E), la deuxième ligne de pliage (E) passant par un angle de l'extrémité libre et cet angle constituant la pointe (20),
pliage oblique en sens opposé de la bande (18) autour d'une troisième ligne de pliage (F), la troisième ligne de pliage (F) passant à peu près en un centre (M) du boîtier (10), et étant placée de manière que la pointe (20) vienne se placer sur le creusement (8),
enfilage de la pointe (20) dans le creusement (8) par cassement à angle droit de la pointe (20) à partir du plan de pliage, et
pliage correspondant de la deuxième moitié de bande.

3. Sac gonflable (15) pour un dispositif de protection contre les impacts, pour les passagers d'un véhicule, constitué d'un boîtier (10) en forme d'auge, dans lequel sont logés un dispositif de gonflage (9) et le sac gonflable (15) replié, et dont face tournée, vers les passagers du véhicule, est pourvu d'un clapet de recouvrement, et qui présente des creusements (8) au voisinage de parois latérales (13, 14) s'étendant obliquement, caractérisé en ce que le sac gonflable (15) est plié, au voisinage des parois latérales (13, 14) s'étendant obliquement, en formant des pointes (20) et les pointes (20) étant enfilées dans les creusements (8).

4. Sac gonflable (15) selon la revendication 3, caractérisé en ce que le sac gonflable (15) est plié en formant une bande (18) parallèle aux parois de boîtier (11, 12) parallèles d'un boîtier (10) afin de loger le sac gonflable (15) et la bande (18) présentant, pour chaque moitié, de manière correspondante :
dans une couche inférieure de paquetage un premier pli (C) qui s'étend, à l'intérieur du boîtier (1) et à l'extérieur du creusement (8), à angle droit par rapport à l'étendue longitudinale de la bande (18), et
dans une couche supérieure de paquetage un pli central (F) qui passe à peu près par un centre (M) du boîtier (10), de manière que la pointe (20) vienne se placer sur le creusement (8), où
les côtés d'un triangle, constituant la pointe (20), sont constitués, d'une part, d'un pli diagonal (E) qui passe par un angle de l'extrémité libre de la bande (19) et, d'autre part, par le bord de cette bande (19).
